# EUROPEAN PATENT APPLICATION

(11) **EP 4 498 478 A1**
(43) Date of publication of application: **29.01.2025**
(21) Application number: 24190240.2
(22) Date of filing: 23.07.2024
(51) Int. Cl.: H01M 10/48, H01M 50/249, H01M 50/308, H01M 50/375, H01M 50/383

(54) **BATTERY PACK**

(30) Priority: 24.07.2023 KR 20230095985
(71) Applicant: SAMSUNG SDI CO., LTD., Giheung-gu Yongin-si, Gyeonggi-do 17084 (KR)
(72) Inventor: KIM, Tae Jin, 17084 Yongin-si (KR)
(74) Representative: Marks & Clerk LLP

(57) **Abstract**

A battery pack capable of detecting the ignition of battery cells before ignition and thereby shortening a fire extinguishing time to improve safety. The battery pack includes a battery module having battery cells electrically connected and including vents; a smoke generating device configured to generate smoke in response to a temperature of the battery cells being higher than a reference temperature; a smoke detection device configured to detect the smoke generated from the smoke generating device and to generate an alarm signal; an agent storage unit including a fire extinguishing tube connected to the battery module and configured to store a fire extinguishing agent supplied to the fire extinguishing tube; and a fire extinguishing receiver configured to receive the alarm signal of the smoke detection device and to generate a supply signal causing the fire extinguishing agent in the agent storage unit to be supplied to the fire extinguishing tube.

## Description

### BACKGROUND

### 1. Field

The present disclosure relates to a battery pack.

### 2. Description of the Related Art

Recently, high-power secondary batteries using non-aqueous electrolytes with high energy density have been developed. A battery pack may include a plurality of above-mentioned high-power secondary batteries connected in series, and thus the battery pack generally has a high capacity and high power. The battery pack may be utilized for driving a motor of a device which requires high power, such as an electric vehicle or the like.

In the battery pack, because several to dozens of battery cells may be connected to form one battery pack, the heat generated from each battery cell needs to be dissipated, and temperature management of the secondary battery can be of utmost importance. Thus, technology for improving safety is being researched.

Further, an increase in temperature of one or more of the secondary batteries can cause a fire, and extinguishing a fire when it occurs presents a challenge due to the characteristics of the battery pack.

The above-described information disclosed in the background technology of the present disclosure is only for improving understanding of the background of the present disclosure, and therefore may include information that does not constitute the related art.

### SUMMARY

The present disclosure provides a battery pack capable of detecting the ignition of battery cells in advance before ignition and shortening a fire extinguishing time to improve safety.

A battery pack according to one embodiment of the present disclosure includes: a battery module including battery cells (e.g. a plurality of battery cells) electrically connected together and including vents (e.g. the plurality of battery cells including a plurality of vents); a smoke generating device configured to generate smoke in response to a temperature of at least one of the battery cells being higher than a reference temperature; a smoke detection device configured to detect the smoke generated from the smoke generating device and to generate an alarm signal in response to detection of the smoke; an agent storage unit including a fire extinguishing tube having one end proximate to the battery module and configured to store a fire extinguishing agent supplied to the fire extinguishing tube; and a fire extinguishing receiver configured to receive the alarm signal from the smoke detection device and to generate a supply signal which causes the fire extinguishing agent in the agent storage unit to be supplied to the fire extinguishing tube.

The smoke generated from the smoke generating device may have a color.

The agent storage unit may be configured to spray the fire extinguishing agent from the fire extinguishing tube onto the battery cells (e.g. the fire extinguishing tube may be configured to spray the fire extinguishing agent on the plurality of battery cells) in response to a fire occurring in the battery pack.

The smoke generating device may be outside the battery module.

The battery pack may further include a temperature sensing unit configured to detect the temperature of one or more of the battery cells (e.g. at least one of the plurality of battery cells) and configured to transmit an abnormal signal to the smoke generating device in response to the temperature of one or more of the battery cells being higher than the reference temperature.

The smoke generating device may be a sheet attached to a surface of each of the battery cells.

A battery pack according to another embodiment of the present disclosure includes: a battery module including battery cells (e.g. a plurality of battery cells) electrically connected together and including vents (e.g. the plurality of battery cells including a plurality of vents); a smoke detection device configured to detect an internal gas discharged through at least one of the vents and to generate an alarm signal; an agent storage unit including a fire extinguishing tube having one end proximate to the battery module (e.g. connected to the battery module) and configured to store a fire extinguishing agent supplied to the fire extinguishing tube; and a fire extinguishing receiver configured to receive the alarm signal of the smoke detection device and to generate a supply signal (e.g. in response to the alarm signal) which causes the fire extinguishing agent in the agent storage unit to be supplied to the fire extinguishing tube.

The smoke detection device may include a suction pipe connected to the battery module and configured to suction the internal gas.

Each of the battery cells may be configured to discharge the internal gas through one of the vents in response to an internal pressure being higher than a reference pressure.

The agent storage unit may be configured to spray the fire extinguishing agent from the fire extinguishing tube onto the battery cells (e.g. the fire extinguishing tube may be configured to spray the fire extinguishing agent on the plurality of battery cells) in response to a fire occurring in the battery pack.

At least some of the above and other features of the invention are set out in the claims.

### BRIEF DESCRIPTION OF DRAWINGS

FIG. 1 is a schematic diagram illustrating a battery pack according to an embodiment of the present disclosure.
FIG. 2 is a schematic diagram illustrating a battery pack according to another embodiment of the present disclosure.
FIG. 3 is a schematic diagram illustrating a battery pack according to a further embodiment of the present disclosure.

### DETAILED DESCRIPTION

Hereinafter, preferred embodiments of the present disclosure will be described in detail with reference to the accompanying drawings.

The embodiments of the present disclosure are provided to more completely describe the present disclosure to those skilled in the art, the following embodiments may be modified into various other forms, and the scope of the present disclosure is not limited to the following embodiments. Rather, these embodiments are provided to make the present disclosure more meaningful and complete and to fully convey the present disclosure to those skilled in the art.

Further, in the following drawings, the thickness and size of each layer are exaggerated for convenience and clarity of description, and the same reference numerals indicate the same elements in the drawings. As used in the present specification, the term "and/or" includes any one of and all combinations of one or more of the listed items. Further, the meaning of "being connected" in the present specification refers to not only a case in which member A and member B are directly connected, but also a case in which member C is interposed between member A and member B to indirectly connect member A and member B.

The terms used in the present specification are used to describe specific embodiments and are not intended to limit the present disclosure. As used in the present specification, a singular form may include a plural form unless the context clearly indicates otherwise. Further, when used in the present specification, "comprise" and/or "comprising" specify(ies) the presence of mentioned features, numbers, steps, operations, members, elements and/or groups thereof, and do(es) not exclude the presence or addition of one or more other features, numbers, steps, operations, members, elements and/or groups.

Although the terms first, second, and the like are used in the present specification to describe various members, components, regions, layers and/or parts, it is obvious that these members, components, regions, layers and/or parts should not be limited by these terms. These terms are used only to distinguish one member, component, region, layer, or part from another member, component, region, layer, or part. Accordingly, a first member, component, region, layer, or part to be described later may refer to a second member, component, region, layer, or part without departing from the teachings of the present disclosure.

Spatially-related terms such as "beneath," "below," "lower," "above," and "upper" are used for easy understanding of one element or feature and another element or feature shown in the drawings. These spatially-related terms are provided for easy understanding of the present disclosure according to various process states or usage states of the present disclosure, and are not intended to limit the present disclosure. For example, when the elements or features in the drawings are reversed, an element described as "lower" or "below" "becomes "upper" or "above." Accordingly, "below" is a concept encompassing "above" or "below."

Preferred embodiments of the present disclosure will be described in detail with reference to the accompanying drawings as follows so that those skilled in the art may easily carry out the present disclosure.

Here, the same reference numerals are added to components having similar configurations and operations throughout the specification. Further, a case in which a certain component is electrically connected to another component includes not only a case in which the components are directly connected, but also a case in which the components are connected with another element therebetween.

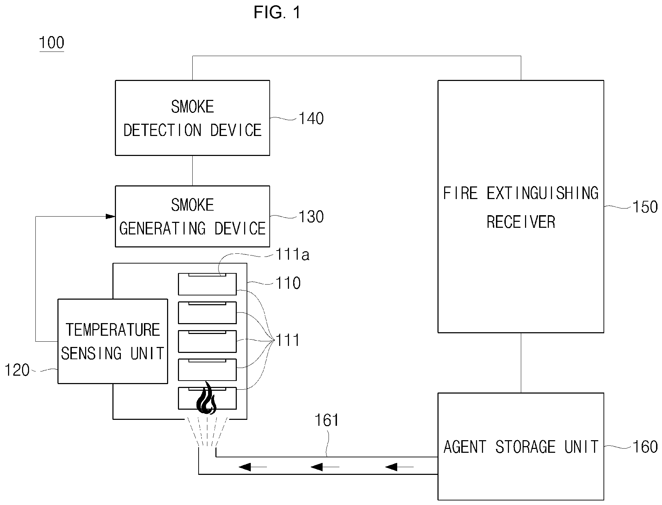

FIG. 1 is a schematic diagram illustrating a battery pack according to an embodiment of the present disclosure.

Referring to FIG. 1, a battery pack 100 according to one embodiment of the present disclosure may include a battery module 110, a temperature sensing unit 120, a smoke generating device 130, a smoke detection device 140, a fire extinguishing receiver 150, and an agent storage unit 160.

The battery module 110 includes a plurality of battery cells 111 electrically connected together. In some embodiments, the plurality of battery cells 111 may be connected in series and/or parallel and may be accommodated in a housing. In one or more embodiments, each of the battery cells 111 may be a cylindrical battery cell or prismatic battery cell. Each of the battery cells 111 may include an electrode assembly accommodated in a case and a cap plate or cap assembly coupled to an upper portion of the case. Further, each of the battery cells 111 may include a vent 111a configured to be broken in response to an internal gas being generated and to thereby discharge the internal gas.

The temperature sensing unit 120 may be configured detect a temperature of the battery module 110. In some embodiments, the temperature sensing unit 120 may be configured to detect a temperature of each battery cell 111. In one or more embodiments, the temperature sensing unit 120 may include a temperature sensor installed in each battery cell 111 to measure (e.g., individually measure) the temperature of the battery cells 111. Further, the temperature sensing unit 120 may be configured to detect the temperature of the battery cells 111 and to transmit the temperature information of the battery cells 111 to the smoke generating device 130. The temperature sensing unit 120 may be configured to transmit an abnormal signal to the smoke generating device 130 in response to the temperature of one or more of the battery cells 111 being higher than a reference temperature. In one or more embodiments, the reference temperature of the temperature sensing unit 120 may be set to approximately 100 °C, but the present disclosure is not limited thereto. The reference temperature set in the temperature sensing unit 120 may be changed or varied according to a variety of design considerations. However, the reference temperature may be set to a temperature lower than the ignition temperature of the battery cells 111. In one or more embodiments, the battery cells 111 may be configured to ignite at approximately 150 °C.

The smoke generating device 130 may be configured to receive the abnormal signal from the temperature sensing unit 120 and to generate smoke in response to receipt of the abnormal signal. As the temperature of the battery cells 111 increases abnormally, the smoke generating device 130 receives an abnormal signal from the temperature sensing unit 120 and generates smoke, thereby notifying personnel of a dangerous situation. In some embodiments, the smoke generating device 130 may include a driving circuit configured to operate in response to receiving the abnormal signal from the temperature sensing unit 120. In some embodiments, in response to the smoke generating device 130 receiving the abnormal signal from the temperature sensing unit 120, the driving circuit of the smoke generating device 130 operates and internal chemicals react with each other, thereby generating smoke. The smoke generated from the smoke generating device 130 may have a color, such as red or blue, which makes it easy to identify the smoke from the outside. In some embodiments, the smoke generating device 130 may be on an outer surface of the battery module 110, for example, in the housing where the battery cells 111 are accommodated. Before a fire occurs in the battery module 110, the smoke generating device 130 may serve to prevent the fire by receiving 111 from the temperature sensing unit 120 an abnormal signal indicating an abnormal temperature rise of the battery cells and thereby generating smoke to notify personnel, and at the same time, notifying the fire extinguishing receiver 150 through the smoke detection device 140. In one or more embodiments, because a manager or worker may notice the smoke generated from the smoke generating device 130 and inform nearby people to evacuate, causalities due to the fire may be prevented. The amount of smoke generated from the smoke generating device 130 may be sufficient to be detected by the smoke detection device 140 and may contain ingredients which are harmless to the human body.

The smoke detection device 140 is configured to detect the smoke generated from the smoke generating device 130. The smoke detection device 140 is configured to detect the smoke from the smoke generating device 130 and to transmit an alarm signal which indicates the generation of smoke to the fire extinguishing receiver 150. In some embodiments, the smoke detection device 140 may be adjacent to the smoke generating device 130. In one or more embodiments, the smoke detection device 140 may be on a ceiling of a facility in which the battery module 110 is installed. The smoke detection device 140 may be configured to detect not only the smoke generated from the smoke generating device 130 but also the smoke generated from a fire occurring in the battery module 110.

The fire extinguishing receiver 150 is configured to receive the alarm signal from the smoke detection device 140 and to transmit a supply signal which causes a fire extinguishing agent to be supplied from (e.g., discharged from) the agent storage unit 160. Because the temperature of the battery module 110 rises and there is a risk of fire (or ignition) through the smoke detection device 140, the fire extinguishing receiver 150 may be configured to issue a command that the fire extinguishing agent be supplied from (e.g., discharged from) the agent storage unit 160 so that the fire can be quickly extinguished.

The agent storage unit 160 stores (e.g. is configured to store) the fire extinguishing agent therein. The agent storage unit 160 includes a fire extinguishing tube 161 configured to supply the fire extinguishing agent to the battery module 110. In some embodiments, a length of the fire extinguishing tube 161 may be roughly (approximately) 50 meters (m), but the present disclosure is not limited thereto. The length of the fire extinguishing tube 161 may be changed according to the installation position of the battery module 110 and/or the agent storage unit 160. In some embodiments, the fire extinguishing agent may contain one or more substances capable of extinguishing a fire occurring in the battery module 110. In one or more embodiments, the fire extinguishing agent may contain one or more of argon, nitrogen, or carbon dioxide, but the present disclosure is not limited thereto. Any type or kind of fire extinguishing agent capable of extinguishing a fire may be utilized.

Because the agent storage unit 160 supplies (e.g., discharges) the fire extinguishing agent to the fire extinguishing tube 161 in response to receiving the supply signal which causes the fire extinguishing agent to be supplied from the fire extinguishing receiver 150, the fire extinguishing agent may be filled in the fire extinguishing tube 161 in advance before a fire occurs in the battery module 110. According to one or more embodiments of the present disclosure, the fire extinguishing agent filled in the fire extinguishing tube 161 may be directly sprayed on the battery module 110 to extinguish the fire in the battery module 110 in response to a fire occurring in the battery module 110, and thus a fire suppressing time (or fire extinguishing time) may be shortened compared to an embodiment in which the fire extinguishing tube 161 is not pre-filled with the fire extinguishing agent.

In one or more embodiments in which the length of the fire extinguishing tube 161 is approximately 50 m, it may take approximately 20 to approximately 30 seconds after a fire for the smoke detection device 140 to detect the smoke and transmit an alarm signal to the fire extinguishing receiver 150, the fire extinguishing receiver 150 to transmit a signal for supplying the fire extinguishing agent to the agent storage unit 160, and the fire extinguishing agent to be sprayed on the battery module 110. Thus, during the tens of seconds between recognizing the fire and spraying the fire extinguishing agent on the battery module 110 after a fire occurs, the fire occurring in the battery module 110 may spread and cause a large fire. Accordingly, even when the extinguishing agent is supplied from the agent storage unit 160, the fire may not be extinguished or the fire extinguishing time may be too long.

However, according to embodiments of the present disclosure, because the fire extinguishing agent may be supplied and filled in the fire extinguishing tube 161 in advance (i.e., pre-filled) based on operation of the smoke generating device 130 before a fire occurs in the battery module 110, when a fire occurs, the fire extinguishing agent may be immediately (or substantially immediately) sprayed on the battery module 110 to shorten the fire extinguishing time and prevent the fire from spreading. Further, the present disclosure may prevent a fire more effectively as a distance between the battery module 110 and the agent storage unit 160 increases.

In some embodiments, the fire extinguishing agent accommodated in the fire extinguishing tube 161 may be sprayed while a portion of the fire extinguishing tube 161 melts due to a fire occurring in the battery module 110. In some embodiments, the fire extinguishing tube 161 may surround (or surround at least a portion of) the battery module 110.

In some embodiments, the agent storage unit 160 may supply the fire extinguishing agent to the fire extinguishing tube 161 in response to receiving the supply signal which causes the fire extinguishing agent to be supplied from the fire extinguishing receiver 150, and the fire extinguishing agent supplied to the fire extinguishing tube 161 may be immediately (or substantially immediately) sprayed on the battery cells 111. In one or more embodiments, the battery cells 111 may be cooled by spraying the fire extinguishing agent on the battery cells 111 before a fire occurs in the battery module 110.

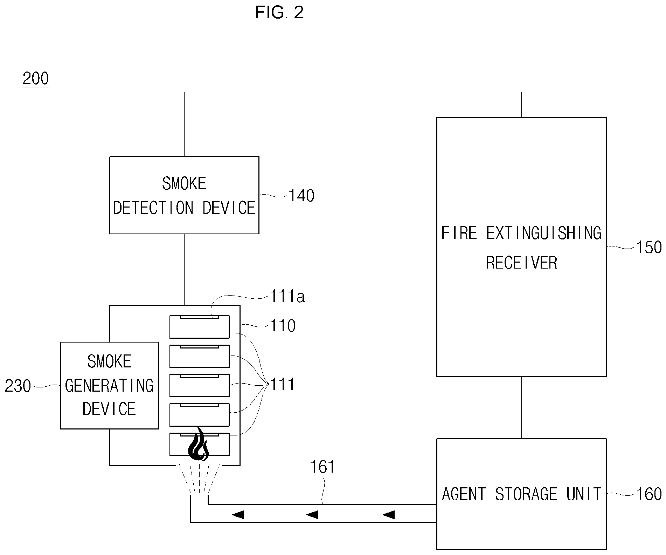

FIG. 2 is a schematic configuration diagram illustrating a battery pack 200 according to another embodiment of the present disclosure.

Referring to FIG. 2, a battery pack 200 according to one embodiment of the present disclosure may include a battery module 110, a smoke generating device 230, a smoke detection device 140, a fire extinguishing receiver 150, and an agent storage unit 160.

The smoke generating device 230 may be in the battery module 110. In some embodiments, the smoke generating device 230 may be on or attached to a surface of each battery cell 111 in the battery module 110. The smoke generating device 230 may be a sheet and may accommodate or include chemicals configured to cause a chemical reaction and generate smoke in response to a reference temperature being reached in the battery module 110. In one or more embodiments, the reference temperature may be set to approximately 100° C, but the present disclosure is not limited thereto. The reference temperature set in the smoke generating device 230 may be changed or varied according to a variety of design considerations.

The smoke generating device 230 may be configured to prevent a fire by generating smoke that is visible by personnel and also notifying the fire extinguishing receiver 150 through the smoke detection device 140 in response to a temperature of one or more of the battery cells 111 increasing to the reference temperature or higher.

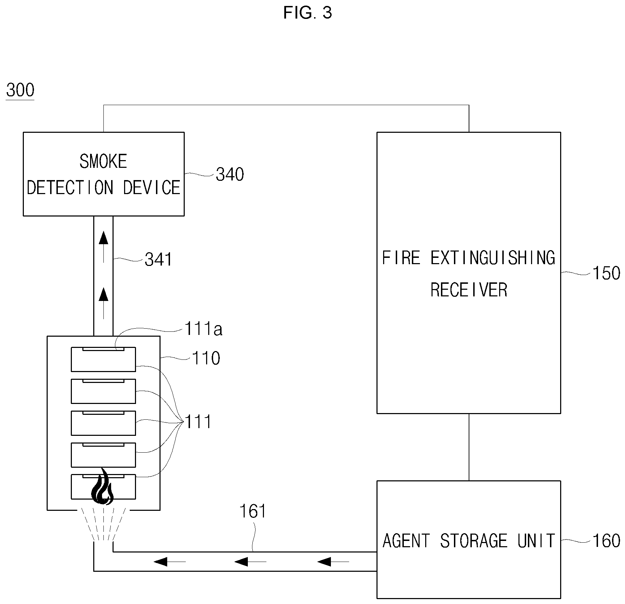

FIG. 3 is a schematic configuration diagram illustrating a battery pack 300 according to still another embodiment of the present disclosure.

Referring to FIG. 3, a battery pack 300 according to the embodiment of the present disclosure may include a battery module 110, a smoke detection device 340, a fire extinguishing receiver 150, and an agent storage unit 160.

The smoke detection device 340 may include a suction pipe 341 connected to the battery module 110. The suction pipe 341 may be configured to suction an internal gas generated from the battery cells 111 in the battery module 110. The smoke detection device 340 may be configured to detect the internal gas generated from the battery cells 111 through the suction pipe 341. In some embodiments, as a temperature of one or more of the battery cells 111 rises, the internal pressure rises and thus the internal gas is generated, and in response to the internal pressure being equal to or higher than a reference pressure, the vent 111a in one or more of the battery cells 111 is broken and the internal gas may be discharged to the outside of the battery cells 111. In one or more embodiments, the smoke detection device 340 may be configured to detect the internal gas discharged from one or more of the battery cells 111 through the suction pipe 341 and to transmit an alarm signal which notifies the generation of gas to the fire extinguishing receiver 150.

Thus, because the smoke detection device 340 may be configured to supply and fill a fire extinguishing agent in the fire extinguishing tube 161 in advance (i.e., prior to a fire) in response to detecting the internal gas generated from one or more of the battery cells 111 and notifying the fire extinguishing receiver 150 before a fire occurs in the battery module 110, when a fire occurs, the fire extinguishing agent may be immediately (or substantially immediately) sprayed on the battery module 110 to shorten the fire extinguishing time and prevent the fire from spreading.

In a battery pack according to an embodiment of the present disclosure, a fire extinguishing agent can be sprayed on battery cells immediately (or substantially immediately) to shorten a fire extinguishing time and prevent a fire from spreading in response to a fire occurring by detecting a temperature rise of the battery cells before the fire occurs in a battery module and by supplying the fire extinguishing agent to the inside of a fire extinguishing tube in advance (i.e., prior to the fire) based on the operation of a smoke generating device.

Further, in the battery pack according to the embodiment of the present disclosure, a dangerous state or condition of the battery cells can be signaled to personnel to prevent causalities by including the smoke generating device which detects the temperature of the battery cells to generate smoke before a fire occurs in the battery module.

What has been described above is only one embodiment for implementing the battery pack according to the present disclosure, and the present disclosure is not limited to the above-described embodiment, and as claimed in the following claims, the present disclosure extends to the extent that various modifications can be made by anyone skilled in the art without departing from the gist of the present disclosure.

## Claims

1. A battery pack comprising:
a battery module comprising a plurality of battery cells electrically connected together, the plurality of battery cells comprising a plurality of vents;
a smoke generating device configured to generate smoke in response to a temperature of at least one of the plurality of battery cells being higher than a reference temperature;
a smoke detection device configured to detect the smoke generated from the smoke generating device and to generate an alarm signal in response to detection of the smoke;
an agent storage unit comprising a fire extinguishing tube having one end proximate to the battery module, the fire extinguishing tube being configured to store a fire extinguishing agent supplied to the fire extinguishing tube; and
a fire extinguishing receiver configured to receive the alarm signal from the smoke detection device and to generate a supply signal in response to the alarm signal, the alarm signal causing the fire extinguishing agent in the agent storage unit to be supplied to the fire extinguishing tube.

2. The battery pack of claim 1, wherein the smoke generated from the smoke generating device has a color.

3. The battery pack of claim 1 or claim 2, wherein the fire extinguishing tube is configured to spray the fire extinguishing agent on the plurality of battery cells in response to a fire occurring in the battery pack.

4. The battery pack of any one of claims 1 to 3, wherein the smoke generating device is outside the battery module.

5. The battery pack of claim 4, further comprising a temperature sensing unit configured to detect the temperature of at least one of the plurality of battery cells and configured to transmit an abnormal signal to the smoke generating device in response to the temperature of the at least one of the plurality of battery cells being higher than the reference temperature.

6. The battery pack of any one of claims 1 to 5, wherein the smoke generating device comprises a sheet attached to a surface of each of the plurality of battery cells.

7. A battery pack comprising:
a battery module comprising a plurality of battery cells electrically connected together, the plurality of battery cells comprising a plurality of vents;
a smoke detection device configured to detect an internal gas discharged through at least one of the plurality of vents and to generate an alarm signal;
an agent storage unit comprising a fire extinguishing tube connected to the battery module and configured to store a fire extinguishing agent supplied to the fire extinguishing tube; and
a fire extinguishing receiver configured to receive the alarm signal from the smoke detection device and to generate a supply signal in response to the alarm signal, the alarm signal which causes the fire extinguishing agent in the agent storage unit to be supplied to the fire extinguishing tube.

8. The battery pack of claim 7, wherein the smoke detection device comprises a suction pipe connected to the battery module, the suction pipe being configured to suction the internal gas.

9. The battery pack of claim 7 or claim 8, wherein each battery cell of the plurality of battery cells is configured to discharge the internal gas through a vent of the plurality of vents in response to an internal pressure being higher than a reference pressure.

10. The battery pack of any one of claims 7 to 9, wherein the fire extinguishing tube is configured to spray the fire extinguishing agent on the plurality of battery cells in response to a fire occurring in the battery pack.
